Europäisches Patentamt

European Patent Office

Office européen des brevets

(11) Numéro de publication: **0 281 440 B1**

(12) **FASCICULE DE BREVET EUROPEEN**

(45) Date de publication de fascicule du brevet: **30.09.92**  (51) Int. Cl.⁵: **H04B 3/00,** H04N 7/10

(21) Numéro de dépôt: **88400243.7**

(22) Date de dépôt: **02.02.88**

(54) **Dispositif pour la transmission à distance de signaux notamment de signaux vidéo.**

(30) Priorité: **04.02.87 FR 8701338**

(43) Date de publication de la demande:
**07.09.88 Bulletin 88/36**

(45) Mention de la délivrance du brevet:
**30.09.92 Bulletin 92/40**

(84) Etats contractants désignés:
**ES GR**

(56) Documents cités:
WO-A-87/00712          FR-A- 2 305 077
FR-A- 2 584 555        GB-A- 1 234 186
US-A- 1 814 453        US-A- 3 290 653

ELECTRONIC DESIGN, vol. 30, no. 19, 16 septembre 1982, pges 99-104, Waseca, MN, Denville, NJ, US; D.R. HAYNES: "Two-wire transmitter promotes painless process control"

(73) Titulaire: **VISICABLE +**
**39-43, Ouai André Citroen**
**F-75015 Paris(FR)**

(72) Inventeur: **Grandmougin, Gérard**
**16, rue Schwendi**
**F-67000 Strasbourg(FR)**

(74) Mandataire: **Poidatz, Emmanuel**
**Cabinet M. SABATIER 83, Avenue Foch**
**F-75116 Paris(FR)**

Rank Xerox (UK) Business Services

## Description

La présente invention a pour objet un dispositif pour la transmission à distance de signaux, et en particulier de signaux vidéo, par deux conducteurs de petite section, non blindés, pouvant être aisément mis en place, notamment entre deux locaux ou deux installations existantes, séparées l'une de l'autre.

On connaît déjà dans la technique de nombreux dispositifs de transmission de signaux et/ou de données entre deux points distants séparés par une distance déterminée. Notamment, on connaît de multiples systèmes utilisant des liaisons par câbles coaxiaux ou par des lignes de transmission appelées "bus". Toutefois, avec ces moyens classiques, s'agissant de transmettre des signaux vidéo, il convient généralement que ceux-ci soient modulés en fréquence ou en amplitude et qu'ils ne restent donc pas en bande de base, si l'on veut éviter une dégradation rapide de ces signaux, d'autant plus notable que le diamètre du câble coaxial utilisé est plus petit. Avec des câbles de gros diamètre, la dégradation du signal est plus limitée mais l'installation coûte cher et surtout est peu pratique lorsqu'il s'agit d'assurer l'équipment de locaux séparés en raison des passages à réserver à ces câbles à travers les cloisons ou séparations entre ces locaux. Pour des câbles de plus petit diamètre, une modulation en fréquence ou en amplitude des signaux est toujours nécessaire, ce qui exige l'utilisation d'un modulateur puis d'un démodulateur qui induisent certaines pertubations et limitations. De plus, certains de ces systèmes destinés à transmettre à distance les signaux provenant de la sortie d'un magnétoscope ou ceux destinés à être amenés à l'entrée d'un récepteur de télévision de type courant, et mettant à profit le démodulateur présent dans les récepteurs de télévision classiques, sont incompatibles avec l'emploi de simples moniteurs de visualisation.

La présente invention a pour objet un dispositif qui permet de transmettre au moins un signal, notamment vidéo, conservé en bande de base sans modulation, qui soit sûr, simple à réaliser et qui permette d'acheminer le signal sans perturber celui-ci et également sans que ce signal ne perturbe son environnement ou soit lui-même perturbé par celui-ci, ceci dans une large bande passante, avec une excellente linéarité et un rapport signal sur bruit qui reste satisfaisant dans toute l'étendue de cette bande.

Plus particulièrement, l'invention vise un dispositif de transmission qui permette de transférer des signaux vidéo, le cas échéant des signaux quelconques, correspondant à des informations de toute nature du genre de celles qui peuvent être rencontrées dans de nombreuses applications aussi bien domestiques qu'industrielles. Ainsi, dans le cas d'hôtels ou de collectivités par exemple, le dispositif selon l'invention permet avantageusement d'assurer la communication entre un central donné ou plus généralement plusieurs postes d'émission de signaux divers concernant le téléphone, des informations relatives à la sécurité, la transmission de messages, la surveillance et le contrôle éventuel des entrées et des sorties, le changement de codage des serrures des portes, le témoin d'usage de certains services, le réveil, la radio, la télévision, etc. Dans de telles applications, il est évident que plus le nombre d'informations transmises par des conducteurs de petite section peut être élevé, plus on évite la multiplication de câbles inesthétiques et encombrants et les inconvénients dus à la mise en place de ceux-ci. La limitation de la ligne à deux conducteurs selon l'invention, dont la section peut notamment être inférieure au mm2, permet au contraire de passer les lignes aisément sous les plinthes, entre les lames de parquet, sous les portes, sous les moquettes, ce qui constitue un grand avantage en milieu domestique ou hôtelier notamment.

Par ailleurs, dans le domaine de la vidéo et de la transmission d'images de télévision, on sait que de plus en plus fréquemment celles-ci peuvent provenir de sources variées notamment de magnétoscopes, caméras, convertisseurs de signaux à transmission par câbles coaxiaux ou par faisceaux de fibres optiques, lecteurs de vidéo-disques, le cas échéant, de récepteurs de télévision, le problème posé étant de mettre en communication à la demande de chacune de ces sources au choix avec d'autres récepteurs ou moniteurs à la disposition des usagers. En dehors même du milieu hôtelier ou collectif, par exemple, pour un simple usage domestique, on peut ainsi envisager aisément de constituer à l'intérieur d'une même habitation un ensemble de transmission, éventuellement interconnecté avec un ensemble audiophonique, permettant de transmettre à distance d'une pièce à l'autre des images de télévision accompagnées de signaux sonores en commandant en outre également à distance les sources de ces signaux.

La présente invention vise ainsi un dispositif de transmission polyvalent pour l'acheminement de signaux, notamment vidéo mais éventuellement d'autres natures, pouvant être transférés selon les normes de tout système (SECAM, PAL, NTSC, D2 MAC PAQUET...) provenant de toute source appropriée (récepteur d'émetteur hertzien, antenne de réception d'émissions par satellites, câbles ...), en évitant l'usage de câbles coaxiaux de transmission particulièrement encombrants et coûteux, et également sujets à des perturbations entre les différents signaux transmis, surtout si les câbles présentent une grande longueur.

On connaît sans doute déjà des systèmes de transmission utilisant deux conducteurs de petit section. Ainsi, le FR-A-2 584 555 se réfère à un dispositif de transmission de signaux à large bande dans un réseau, éventuellement de vidéo-communication à structure étoilée, où une information vidéo peut être transmise à distance vers une pluralité de postes de réception distincts. Dans ces systèmes, les signaux à transmettre sont adaptés dans un équipement d'entrée et envoyés vers un équipement de sortie par l'intermédiaire d'une ligne bifilaire équilibrée et symétrique à travers une matrice de commutation comportant M lignes et N colonnes interconnectées, la matrice étant associée à une mémoire d'adresses permettant de sélectionner le point de commutation choisi. Dans ces systèmes enfin, les signaux transmis sont préalablement traités dans l'équipement d'entrée de manière à séparer les composantes basse et haute fréquences, chacune d'elles faisant l'objet d'une transmission sur la ligne bifilaire selon un mode différent. En ce qui concerne notamment la composante haute fréquence du signal, celle-ci est acheminée en mode différentiel à travers un transformateur, les deux composantes traversant, dans l'équipement de sortie, un dispositif de sommation pour reconstituer le signal. Un tel dispositif est complexe, coûteux et risque d'introduire une perturbation du signal avec un rapport signal sur bruit médiocre surtout si la bande de fréquence est relativement élargie.

On connait également du brevet US-A-3.290.653 un dispositif de transfert d'informations numériques entre un équipement d'entrée et un équipement de sortie par l'intermédiaire d'une ligne de transmission à deux conducteurs torsadés. Le dispositif utilisable dans un calculateur numérique est destiné à transmettre un signal de type digital sous forme de niveaux logiques 0 et 1. L'équipement d'entrée faisant fonction d'émetteur comporte deux transistors de polarité opposée qui dans certaines conditions opératoires fonctionnent en générateurs de courant pour inverser la direction du courant circulant dans la ligne de transmission, l'inversion du courant détectée par l'équipement de sortie étant alors significative du changement d'état logique 0 ou 1. Par son principe de fonctionnement en inversion de courant, un tel dispositif n'est pas adapté à la transmission de signaux analogiques, notamment des signaux vidéo. De plus, une ligne torsadée dont l'impédance caractéristique est assez difficile à établir est toujours délicate à adapter.

La présente invention apporte vis-à-vis de l'art antérieur ainsi représenté l'avantage d'un dispositif très simple, permettant de transmettre dans des conditions optimales tous les signaux reçus à l'entrée, quel que soit le standard utilisé, c'est-à-dire en fait quelles que soient la forme et la structure du signal, notamment vidéo. En particulier, avec le dispositif de l'invention, il n'est pas nécessaire de séparer les signaux à haute et basse fréquence dans le spectre du signal, celui-ci dans toute son étendue pouvant être immédiatement transmis à distance par les deux conducteurs de la ligne équipée de tranformateurs symétriques, grâce à une adaptation appropriée de cette dernière et à un équilibrage de la ligne évitant le rayonnement de celle-ci.

A cet effet, le dispositif de transmission de signaux, notamment vidéo, entre au moins dans un ensemble émetteur et au moins un ensemble récepteur au moyen d'une ligne de liaison à deux fils, équipé à chaque extrémité d'un transformateur symétrique et alimenté par au moins un générateur de courant, se caractérise en ce que la ligne est adaptée à chaque extrémité par une impédance égale à son impédance caractéristique, chaque ensemble émetteur comportant deux générateurs de courant commandés en tensions inversées par les signaux à transmettre, dont la fréquence est comprise entre 50 Hz et 30 MHz, et débitant symétriquement sur les fils de la ligne, lesdits générateurs de courant étant montés en série avec l'impédance d'adaptation (25) côté émetteur de la ligne.

De préférence, l'impédance en série avec le générateur comporte des résistances et une capacité propre à séparer la composante continue vis-à-vis des signaux à transmettre. En outre, l'impédance d'adaptation est avantageusement constituée au moyen de deux impédances égales, montées en série et dont le point milieu est relié à la masse par une capacité. De même,, dans chaque ensemble récepteur, l'impédance d'adaptation de la ligne est montée en parallèle sur celle-ci et est à nouveau constituée de deux impédances égales montées en série avec point milieu à la masse.

Selon une autre caractéristique avantageuse de l'invention, chaque récepteur comporte deux générateurs de courant fournissant le courant d'alimentation de cet ensemble. En outre et selon encore une autre caractéristique, l'ensemble récepteur comporte un générateur de courant complémentaire, à fonctionnement symétrique, commandé en tension par des signaux modulés, distincts de ceux qui commandent les générateurs de l'ensemble émetteur, ces signaux pouvant être en particulier des signaux de télécommande cheminant sur la ligne bifilaire en sens inverse des signaux reçus de l'émetteur.

Avantageusement, les deux fils identiques sont non blindés, et présentent une section des conducteurs inférieure ou au plus égale à 1mm, étant entendu ici que l'invention trouve ses avantages essentiels dans l'emploi de conducteurs de petite section mais que la limite de 1mm précitée n'a en elle-même aucun caractère limitatif. En outre, bien que à l'évidence les fils de la ligne présentent préférentiellement une section cylindrique, ils pourraient également sans sortir du cadre de l'invention être plats et notamment en forme de rubans déposés sur un support isolant ou noyé dans celui-ci.

De préférence également, les transformateurs symétriques équipant chaque extrémité de la ligne à deux conducteurs sont des transformateurs à tore magnétique dont chaque enroulement est monté en série avec un des fils de la ligne. Selon une caractéristique particulière, les enroulements des transformateurs symétriques sont eux-mêmes constitués par un câble bifilaire formé au moyen des fils de la ligne.

D'autres caractéristiques d'un dispositif de transmission de signaux selon l'invention apparaîtront encore à travers la description qui suit d'un exemple de réalisation, donné à titre indicatif et non limitatif en référence aux dessins annexes sur lesquels:

- La Figure 1 est un diagramme de principe représentant en ordonnée la tension maximale d'un signal transmis en fonction de la longueur des fils de transmission dans une ligne quelconque, donnée en abscisses.
- La Figure 2 est un bloc diagramme schématique du dispositif de transmission selon l'invention.
- La Figure 3 illustre avec plus de détails l'ensemble émetteur du dispositif.
- La Figure 4 illustre également avec plus de détails l'ensemble récepteur du dispositif.
- La Figure 5 est un bloc diagramme du dispositif permettant de mieux comprendre la mise en oeuvre des moyens qui réalisent également, selon l'invention, l'équilibrage en tension du dispositif.

De façon générale, on sait par la théorie et l'expérience que dans une installation de transmission de signaux au moyen d'une ligne bifilaire, on peut diminuer considérablement le rayonnement créé par l'ensemble des deux fils en réduisant la dissymétrie du fonctionnement à la transmission. Le dispositif selon l'invention met fondamentalement à profit cette observation.

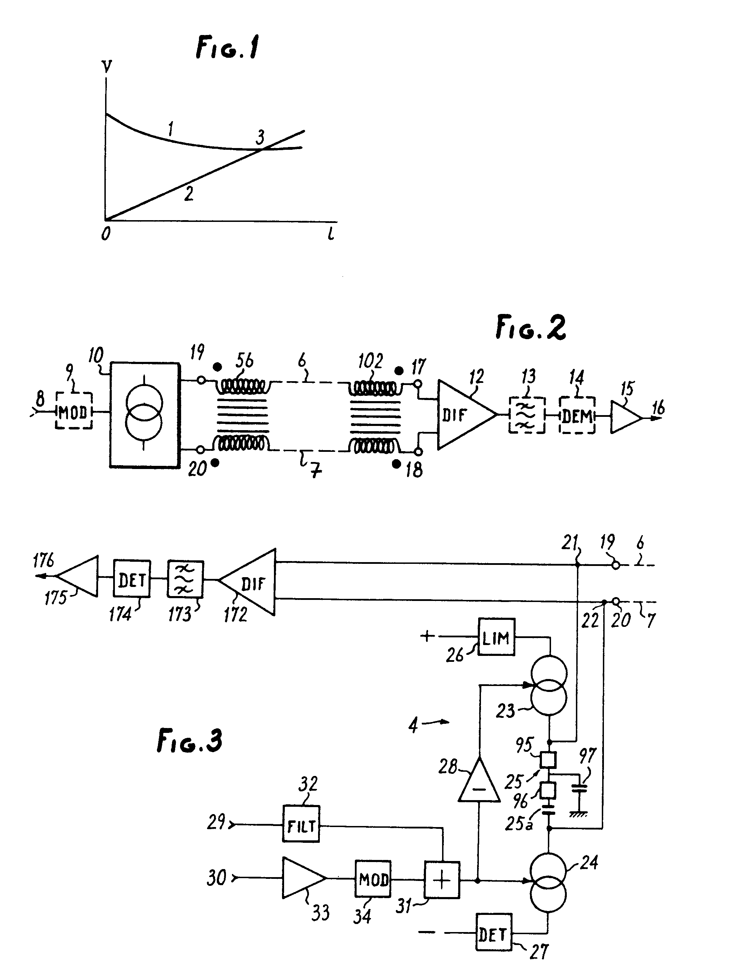

Sur la Figure 1, on a représenté par la courbe 1 la tension maximale d'un signal transmis en fonction de la longueur des fils de transmission pour une limite maximale de rayonnement donnée. La courbe 1, naturellement décroissante, présente en pratique des irrégularités si la transmission est dissymétrique, les fils se comportant comme une antenne. Sur cette même Figure 1, on a représenté par la courbe 2 l'influence de la tension créée par les bruits parasites dus au champ électrique extérieur sur la ligne, également en fonction de la longueur des fils.

On constate ainsi que cette influence augmente sensiblement linéairement lorsque les fils de transmission sont rectilignes. Par contre, si ces fils suivent des trajets complexes, ce qui est généralement le cas dans les applications prévues où les signaux doivent être transmis entre deux locaux séparés par la ligne montée en suivant un parcours approprié dans lequel elle sera le mieux dissimulée, la courbe 2 devient complexe, puisque sa pente dépend de très nombreux facteurs et en particulier de la fréquence du champ extérieur et de la forme de ce champ, On en déduit que pour assurer une meilleure transmission, il est avantageux que le point d'intersection 3 des courbes 1 et 2 soit le plus éloigné possible sur l'axe des abscisses pour permettre la transmission la plus efficace.

Cette condition est notamment réalisée grâce à une symétrie dans la ligne de transmission. En effet, plus la symétrie est grande, plus la courbe 1 se situe plus haut dans le diagramme de la Figure 1 et plus la pente de la courbe 2 est faible, ce qui autorise une plus grande longueur de transmission non perturbée possible. En outre, la mise en oeuvre d'une telle symétrie dans la ligne permet d'éviter l'usage d'un blindage pour les fils conducteurs, qui devient ici superflu.

Le dispositif selon l'invention met donc à profit les observations qui précèdent. A cet effet, il comprend essentiellement une ligne de transmission à deux fils de petite section de l'ordre de 1mm2 ou moins, reliant un ensemble émetteur à un ensemble récepteur. Ces fils sont cylindriques et parallèles, maintenus dans cette position par un matériau isolant approprié. L'ensemble émetteur peut comprendre un nombre variable d'entrées, propres à être reliées à des sources de signaux divers et l'ensemble récepteur le même nombre ou un nombre différent de sorties pouvant être reliées à des utilisateurs, recevant et exploitant les signaux provenant de l'émetteur et acheminés par la ligne. La ligne de transmission bifilaire et les ensembles respectivement émetteur et récepteur, constituent la base du dispositif. L'émetteur et le récepteur et peuvent être montés symétriquement ou bien être chacun émetteur et récepteur. En outre, on peut prévoir sur la ligne des émetteurs ou récepteurs intermédiaires tels qu'un signal quelconque soit à la fois reçu puis ré-émis pour poursuivre sa transmission sur la ligne vers d'autres récepteurs. De même, à chaque récepteur intermédiaire, on peut ajouter des signaux complémentaires venant se superposer sur la ligne, à ceux déjà transmis sur celle-ci, sans perturbation de ces signaux et du fonctionnement de la ligne.

Selon l'invention, à chaque extrémité de la ligne de transmission sont connectés à travers des transformateurs symétriques des générateurs de courant dont les caractéristiques et le mode de commande sont choisis conformément à l'invention pour assurer un parfait équilibrage symétrique de l'ensemble. En particulier, chaque générateur de courant est conçu de façon à permettre d'envoyer un signal et/ou un courant sur la ligne ou de prélever un signal sur celle-ci, sans altérer la valeur de l'impédance de charge de cette ligne. Dans l'ensemble émetteur, les générateurs de courant sont commandés en tension de façon symétrique à partir des signaux à transmettre. Dans l'ensemble récepteur, les générateurs sont connectés aux extrémités des fils de transmission, de préférence et comme on le verra ci-après à travers un pont de diodes pour éviter des erreurs de polarités lors du branchement des fils.

De façon la plus générale, le dispositif est donc prévu pour réaliser un équilibrage permanent de la ligne au point de vue tensions continues, en particulier en évitant toute possibilité de court-circuit par la terre. En outre, au niveau de chaque ensemble émetteur et/ou récepteur, un équilibrage particulier du point de vue de la symétrie de la ligne est également assuré au moyen d'une impédance montée en série avec les générateurs de courant, elle-même en parallèle sur les fils de transmission pour former à chaque fois un montage où les tensions alternatives mises en jeu sont équilibrées.

Sur la Figure 2, les fils de transmission de la ligne sont désignés sous les références 6 et 7 respectivement. Les signaux à transmettre provenant d'une source (non représentée) arrivent en 8 et si nécessaire sont modulés en fréquence ou en amplitude. En particulier, si les signaux à l'entrée sont des signaux vidéo, ils sont utilisés tels quels, en bande de base sans modulation ; en revanche, si les signaux sont d'une autre nature, par exemple les signaux audio qui accompagnent usuellement les signaux vidéo, ceux-ci sont convenablement modulés pour se superposer aux signaux vidéo.

Le signal résultant commande alors en tension un ensemble générateur de courant 10, suivi d'un transformateur symétrique 56, de préférence à tore magnétique. Après transmission par les fils 6 et 7 de la ligne, les signaux passent par un second transformateur symétrique 102 également à tore magnétique et par un amplificateur différentiel 12, suivi généralement d'un filtre 13 pour ne laisser passer que les signaux souhaités. L'amplificateur différentiel 12 élimine notamment les tensions asymétriques sur les fils 6 et 7 dues à des perturbations extérieures, tandis que le filtre 13 sépare les signaux élémentaires ainsi transmis. A la sortie du filtre, les signaux sont éventuellement démodulés dans un circuit démodulateur 14 puis amplifiés en 15 avant d'aboutir à la sortie 16 du dispositif.

Les transformateurs 56 et 102 font directement partie de la ligne de transmission formée des conducteurs 6 et 7. De préférence, ces transformateurs comportent des enroulements bobinés au moyen de conducteurs bifilaires. Avantageusement même, les enroulements des transformateurs sont réalisés à l'aide des fils 6 et 7 de la ligne. Sur le dessin de la Figure 2, les références 17 et 18 d'une part, 19 et 20 d'autre part, schématisent les connexions de la ligne avec les ensembles émetteur et récepteur, les points noirs sur la Figure précisant de façon schématique le sens des enroulements des transformateurs.

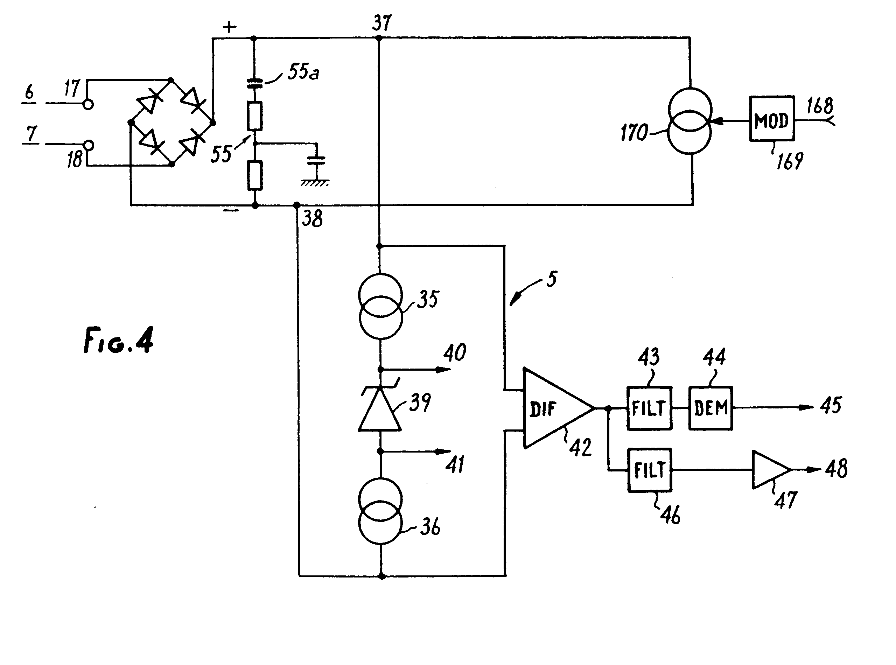

La Figure 3 illustre avec plus de détails la réalisation d'un ensemble émetteur 4, utilisé dans le dispositif selon l'invention.

Comme on le voit sur cette Figure, on injecte en 21 et 22 sur les fils 6 et 7 de la ligne les signaux à transmettre, fournis par l'émetteur 4 de la manière suivante : deux générateurs de courant 23 et 24 de caractéristiques identiques, commandés en tension par les signaux à transmettre, sont connectés à ces fils en 21 et 22 et débitent sur ceux-ci un courant caractérisant le signal à transmettre. Les bornes des générateurs 23 et 24 sont séparées par une impédance de charge 25, associée en série à une capacité 25a assurant la séparation des composantes alternatives et continues du courant.

L'impédance 25 est égale à l'impédance caractéristique de la ligne. Elle est de préférence constituée au moyen de deux résistances égales, respectivement 95 et 96, présentant chacune une résistance égale à la moitié de l'impédance caractéristique de la ligne, leur point milieu étant réuni à la masse par l'intermédiaire d'un condensateur 97. Les autres bornes des générateurs 23 et 24 sont réunies respectivement à une borne d'alimentation positive à travers un limiteur de courant 26 et à une borne d'alimentation négative. Un détecteur de courant 27 peut être prévu sur le circuit des générateurs.

Le limiteur de courant 26 protège les générateurs, notamment en cas accidentel de court-circuit entre les fils de transmission 6 et 7 ou de court-circuit avec la terre ou un conducteur quelconque.

Par ailleurs, les deux générateurs 23 et 24 sont commandés par des tensions inverses grâce au montage entre eux d'un inverseur 28 à partir des signaux appliqués à l'entrée de l'émetteur en 29 et 30. Bien entendu, le nombre des entrées peut être différent de deux, l'émetteur pouvant recevoir à l'entrée autant de signaux que nécessaire sur autant de voies parallèles.

Dans l'exemple représenté, on suppose que l'on injecte en 29 un signal vidéo et en 30 un signal audio, superposés dans l'additionneur 31 après avoir été pour le premier filtré en 32 et pour le second éventuellement amplifié par un amplificateur à gain variable 33 puis modulé en 34, les signaux étant ainsi séparés en fréquence dans la bande passante de l'émetteur, le dispositif selon l'invention permettant de traiter des signaux dont les fréquences sont comprises généralement entre 50 Hz et 30 MHz sans que ces valeurs soient en elles-mêmes limitatives.

Le montage de l'émetteur 4 avec ses générateurs de courant 23 et 24 eux-mêmes montés en série avec l'impédance 25 égale à l'impédance caractéistique de la ligne permet ainsi de passer d'un fonctionnement asymétrique à l'entrée en 29 et 30 des signaux, à un fonctionnement parfaitement symétrique à la sortie das générateurs, notamment en 21 et 22 où ces signaux sont introduits sur la ligne de transmission. A la sortie des générateurs, le signal résultant transmis à la ligne, égal à la différence des tensions sur les fils de celle-ci, représente la valeur relative des signaux à l'entrée de l'émetteur.

Le fonctionnement symétrique ainsi réalisé sur les deux conducteurs de la ligne évite dès lors un rayonnement parasite à l'émission de même que l'effet des champs parasites à la réception.

Sur le circuit de l'émetteur de la Figure 3, on a également prévu, pour recevoir en sens inverse de la transmission des signaux issus de l'émetteur, d'autres signaux par exemple de téleécommande provenant de la ligne, le montage entre les mêmes points de liaison 21 et 22, d'un amplificateur différentiel 172 recevant ces signaux complémentaires, suivi d'un filtre passe bande 173, d'un démodulateur 174 et d'un amplificateur 175, les signaux le télécommande aboutissant à une sortie 176 à partir de laquelle ils peuvent assurer la commutation des sources de signaux divers, en modifiant au choix ceux introduits dans l'émetteur en 29 et 30 notamment.

Sur la Figure 4, on a ensuite représenté un ensemble récepteur du dispositif, avec une impédance 55 et une capacité 55a, identiques à l'impédance 25 et au condensateur 25a de l'ensemble émetteur. Le récepteur est également associé à deux autres générateurs de courant 35 et 36 dont l'alimentation est en revanche effectuée directement par les signaux reçus à travers les conducteurs 6 et 7 de la ligne. L'impédance 5 et les deux générateurs 35 et 36 en série sont montés en parallèle entre les bornes 37 et 38 d'un pont de diodes 11, dont les deux autres bornes sont connectées en 17 et 18 aux deux fils 6 et 7 de la ligne de transmission. Comme déjà indiqué, ce pont de diodes sert à éviter les inconvénients d'une inversion éventuelle de polarités au montage, de manière à recevoir sur les générateurs 35 et 36, les signaux délivrés par les générateurs 23 et 24 de l'émetteur.

Les générateurs 35 et 36 sont séparés par un limiteur de tension, du genre diode Zener 39. Aux bornes 40 et 41 de cette diode, on recueille une tension d'alimentation pour les divers circuits de l'ensemble récepteur.

Sont ainsi connectés aux bornes 37 et 38 des générateurs 35 et 36, un amplificateur différentiel 42 puis, à la sortie de celui-ci, l'une ou l'autre de deux voies de sortie. L'une comporte un filtre passe bande 43 et un démodulateur 44 dont la sortie 45 fournit à un utilisateur quelconque le signal audio injecté en 30 à l'entrée de l'émetteur 4 (Fig. 3). Sur l'autre voie, le signal traverse un filtre rejecteur 46 éliminant la sous-porteuse audio et fournissant, après traversée d'un amplificateur 47, sur une sortie 48, le signal vidéo tel qu'injecté à l'émetteur en 29. La sortie 48 peut être une sortie classique pour signaux vidéo, à 75 ohms.

Le dispositif selon l'invention permet également de transmettre en sens inverse des signaux reçus par le récepteur 5 d'autres informations par exemple des signaux de télécommande. Dans ce cas, on peut avantageusement prévoir que ces signaux, reçus en 168 d'une source appropriée (non représentée) d'abord modulés dans un circuit modulateur 169, commandent ensuite en tension un générateur de courant 170 à fonctionnement symétrique, monté en parallèle avec l'ensemble récepteur 5 entre les bornes 37 et 38.

Par analogie avec la Figure 3, il convient de souligner que l'on peut monter à la sortie de l'amplificateur différentiel 42 autant de voies que souhaité pour permettre la réception d'un nombre correspondant de signaux représentant des informations distinctes, ces signaux pouvant selon le cas être modulés ou non. De même, il est clair que l'on peut aussi brancher directement sur la sortie 48 tout type d'appareil d'utilisation de ces signaux, par exemple un récepteur de télévision possédant une entrée vidéo ou un moniteur.

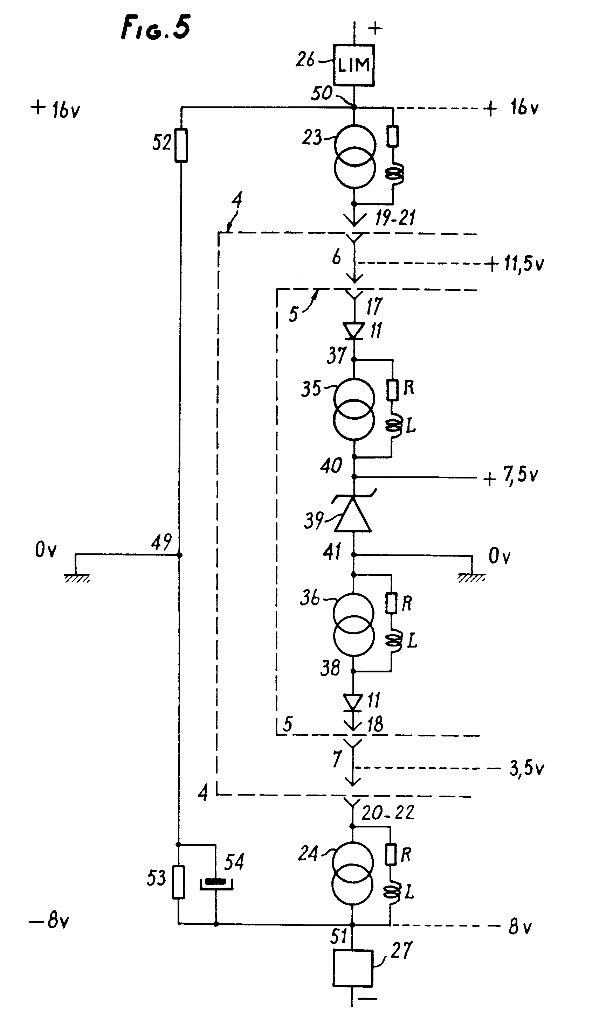

La figure 5 illustre les moyens mis en oeuvre dans le dispositif selon l'invention pour parfaire l'équilibrage des tensions mises en jeu. Sur cette Figure, on a repris les éléments essentiels des Figures 2, 3 et 4 précédentes en indiquant, depuis l'alimentation positive de l'émetteur jusqu'à l'alimentation négative, le bilan des tensions adoptées, les valeurs de ces dernières étant bien entendu données à titre purement indicatif. Pour les composantes très basses fréquences ou la composante continue des tensions sur les générateurs, ceux-ci se comportent comme des résistances. Sur chaque générateur, est representée, montée en parallèle, une résistance R et une inductance L qui symbolisent ensemble le circuits mis en oeuvre.

On retrouve donc dans l'ordre du haut en bas, ce qui correspond à des tensions décroissantes du positif au négatif, le limiteur de courant 26, le générateur 23, la borne 19, le fil de transmission 6, la borne 17, une des diodes actives du pont de diodes 11, la borne 37, le générateur 35, la borne 40, la diode de Zener 39, la borne 41, le générateur 36, la borne 38, l'autre diode active du pont 11, la borne 18 le fil de transmission 7, la borne 20 et le générateur 24.

Les tirets passant par les bornes 17, 18, 19, 20 délimitent symboliquement l'émetteur 4 et le récepteur 5.

Les transformateurs symétriques à tores magnétiques ont été, ici omis et supposés inclus dans la ligne de transmission. Egalement, n'ont pas été représentées les impédances 25 et 55.

L'ensemble représenté forme un diviseur de tension, ici entre + 16 v et - 8 v, les deux fils 6 et 7 étant respectivement portés à + 11,5 v et - 3,5 v représentant une différence le potentiel de + 4,5 v pour chacun des générateurs 23 et 24. Les sorties d'alimentation 40 et 41 du récepteur 5 sont respectivement portées à + 7,5 v et à la masse, soit + 4 v de potentiel pour les générateurs 35 et 36 et + 7,5 pour la diode Zener 39.

Si l'on souhaite que la masse 41 du récepteur 5 et celle 49 de l'émetteur 4 soient au même niveau, égal à 0 v, il est donc nécessaire que les diverses résistances assurent l'équilibrage entre les bornes 50-49, 50-41 d'une part et 49-51 et 41-51 d'autre part. Cet équilibrage en tension résulte de la proportionnalité des résistances équivalentes et de résistances complémentaires 52 et 53, cette dernière étant associée avec une capacité 54 réalisant la mise à la masse de l'alimentation pour les signaux alternatifs.

On réalise ainsi un dispositif de transmission de signaux de conception très simple et qui permet d'acheminer ceux-ci sur une distance notable dans une large bande de fréquence, depuis un émetteur recevant ces signaux vers un récepteur qui les restitue à l'utilisateur. Ces signaux peuvent être de toute nature et en particulier être des signaux vidéo en bande de base, le plus souvent associés à un signal audio modulé sans préjudice d'autre signaux s'ajoutant aux précédents. Ces signaux commandent en tension des générateurs de courant qui, du côté de l'émetteur excitent la ligne de transmission, ces générateurs travaillant en opposition et se refermant sur une impédance égale à l'impédance caractéristique de la ligne. Ces mêmes signaux, à la réception, alimentent le récepteur en courant continu et y restituent l'alimentation au moyen de deux générateurs de courant symétriques, se refermant sur une diode Zener, les signaux à la sortie traversant un amplificateur différentiel au-delà duquel il sont traités pour restituer sans perturbation ni modification les signaux d'entrée. Le dispositif permet par ailleurs de superposer à la transmission ainsi effectuée l'envoi de signaux en sens inverse, par exemple du genre signaux de télécommande convenablement modulés, ces signaux étant émis dans le récepteur par un générateur de courant indépendant, débitant en parallèle sur la ligne.

Bien extendu, il va de soi que l'invention ne se limite pas à l'exemple spécialement décrit et représenté. En particulier, les fils de la ligne peuvent être cylindriques et parallèles, ou bien être plats et disposés côte à côte. De préférence, ces fils sont maintenus parallèles l'un à l'autre par un enrobage de matériaux isolants, ce qui permet une constance plus grande de l'impédance caractéristique tout au long de la ligne.

## Revendications

1. Dispositif de transmission de signaux, notamment vidéo, entre au moins un ensemble émetteur et au moins un ensemble récepteur au moyen d'une ligne de liaison à deux fils, équipée à chaque extrémité d'un transformateur symétrique et alimentée par au moins un générateur de courant, caractérisé en ce que la ligne est adaptée à chaque extrémité par une impédance égale (25, 55) à son impédance caractéristique, chaque ensemble émetteur (4) comportant deux générateurs de courant (23-24) commandés en tension inversées par les signaux à transmettre, dont la fréquence est comprise en 50 Hz et 30MHz, et débitant symétriquement sur les fils (6-7) de la ligne, lesdits générateurs de courant (23-24) étant montés en série avec l'impédance d'adaptation (25) côté émetteur de la ligne.

2. Dispositif selon la revendication 1, caractérisé en ce que l'impédance d'adaptation (25) en série avec les générateurs (23, 24) comporte des résistances et une capacité propre à séparer la composante continue des signaux à transmettre.

3. Dispositif selon la revendication 1, caractérisé en ce que l'impédance d'adaptation (25) de la ligne est constituée par deux impédances égales ( 95-96) montées en série, dont le point milieu est relié à la masse par une capacité (97).

4. Dispositif selon la revendication 1, caractérisé en ce que dans chaque ensemble récepteur (5), l'impédance d'adaptation (55) de la ligne est montée en parallèle sur celle-ci et est constituée de deux impédances égales montées en série dont le point milieu est relié à la masse par une capacité.

5. Dispositif selon l'une quelconque des revendications 1 à 4 caractérisé en ce que l'ensemble récepteur (5) reçoit les signaux transmis sur la ligne, à partir de l'ensemble émetteur (4), à travers un pont de diodes (11).

6. Dispositif selon l'une des revendications précédentes, caractérisé en ce que l'ensemble récepteur (5) comporte deux générateurs de courant (35-36) fournissant un courant d'alimentation pour ledit ensemble récepteur.

7. Dispositif selon la revendication 6, caractérisé en ce que l'ensemble récepteur (5) comporte un générateur de courant complémentaire (170) à fonctionnement symétrique commandé en tension par des signaux modulés distincts de ceux qui commandent les générateurs (23-24) de l'ensemble émetteur (4).

8. Dispositif selon la revendication 7, caractérisé en ce que les signaux modulés commandant le générateur complémentaire (170) sont des signaux de télécommande.

9. Dispositif selon la revendication 6, caractérisé en ce que, entre les deux générateurs de courant (35-36) de l'ensemble récepteur (5), est monté un limiteur de tension (39).

10. Dispositif selon la revendication 9, caractérisé en ce que le limiteur de tension (39) est une diode de Zener.

11. Dispositif selon l'une des revendications précédentes, caractérisé en ce que l'ensemble émetteur (4) comporte deux générateurs de courant (23-24) à caractéristiques identiques commandés en tension inversées par montage d'un inverseur (28) entre leurs entrées de commande.

12. Dispositif selon l'une des revendications précédentes, caractérisé en ce que l'ensemble émetteur (4) comporte un limiteur (26) du courant d'alimentation des générateurs (23-24).

13. Dispositif selon la revendication 12, caractérisé en ce que le limiteur de courant (26) est réuni à une borne d'alimentation positive d'un des générateurs (23), un détecteur (27) étant réuni à sa borne d'alimentation négative.

14. Dispositif selon l'une quelconque des revendications précédentes, caractérisé en ce que les signaux à transmettre qui commandent les générateurs de courant (23-24) de l'émetteur (4) résultent de la superposition de premiers signaux vidéo et de seconds signaux, préalablement modulés et éventuellement amplifiés.

15. Dispositif selon l'une quelconque des revendications précédentes, caractérisé en ce que les signaux transmis à l'ensemble récepteur (5) par la ligne (6-7) traversent un ampli différentiel (42) et sont séparés par filtrage (43-46) puis, éventuellement, démodulés et amplifiés (44-47).

16. Dispositif selon l'une quelconque des revendications précédentes, caractérisé en ce que l'ensemble émetteur (4) et l'ensemble récepteur (5) sont simultanément et respectivement récepteur et émetteur.

17. Dispositif selon l'une des revendications précédentes, caractérisé en ce que les générateurs de courant (23-24, 35-36) sont équivalents à une résistance vis-à-vis de la composante continue du courant.

18. Dispositif selon l'une des revendications précédentes, caractérisé en ce que les deux fils (6-7) sont identiques et présentent une section des conducteurs inférieure ou au plus égale à 1 mm.

19. Dispositif selon l'une des revendications précédentes, caractérisé en ce que les transformateurs symétriques (56-102) sont des transformateurs à tore magnétique dont chaque enroulement est monté en série avec un des fils de la ligne.

20. Dispositif selon l'une des revendications précédentes, caractérisé en ce que les enroulements des transformateurs symétriques (56-102) sont constitués par un câble bifilaire.

21. Dispositif selon la revendication 20, caractérisé en ce que le câble bifilaire formant les enroulements des transformateurs symétriques (56-102) est constitué par les fils (6-7) de la ligne.

22. Dispositif selon l'une quelconque des revendications précédentes, caractérisé en ce que les fils de la ligne, cylindriques ou plats, sont maintenus parallèles entre eux au moyen d'un enrobage commun d'un matériau isolant.

**Claims**

1. A device for transmitting signals, in particular video signals, between at least one transmitting assembly and at least one receiving assembly by means of a connection line having two wires, equipped at each and with a symmetrical transformer and supplied by at least one current generator, characterised in that the line is matched at each end by an equal impedance (25, 55) to its characteristic impedance, each transmitting assembly (4) comprising two current generators (23-24) controlled in inverted voltages by the signals to he transmitted, the frequency of which is comprised between 50 Hz and 30 MHz, and delivering symmetrically over the wires (6-7) of the line, the said current generators (23-24) being mounted in series with the matching impedance (25) at the transmitting side of the line,

2. A device according to claim 1, characterised in that the matching impedance (25) in series with the generators (23, 24) comprises resistors and a capacitor suitable for separating the continuous component of the signals to be transmitted.

3. A device according to claim 1, characterised in that the matching impedance (25) of the line is formed by two equal impedances (96-96) mounted in series, the middle point of which is connected to earth by a capacitor (97).

4. A device according to claim 1, characterised in that in each receiving assembly (5) the matching impedance (55) of the line is mounted in parallel on this latter and is mode up of two equal impedances mounted in series, the middle point of which is connected to earth by a capacitor.

5. A device according to any one of claims 1 to 4, characterised in that the receiving assembly (5) receives the signals transmitted over the line, from the transmitting assembly (4), through a diode bridge (11).

6. A device according to one of the preceding claims, characterised in that the receiving assembly (5) comprises two current generators (35-36) supplying a feed current for the said receiving assembly.

7. A device according to claim 6, characterised in that the receiving assembly (5) comprises a complementary current generator (170) having symmetrical operation controlled in voltage by modulated signals distinct from those which control the generators (23-24) of the transmitting assembly (4).

8. A device according to claim 7, characterised in that the modulated signals controlling the complementary generator (170) are remote-control signals.

9. A device according to claim 6, characterised in that a voltage limiter (39) is mounted between the two current generators (35-36) of the receiving assembly (5).

10. A device according to claim 9, characterised in that the voltage limiter (39) is a Zener diode.

11. A device according to one of the preceding claims, characterised in that the transmitting assembly (4) comprises two current generators (23-24) having identical characteristics controlled in inverted voltages by fitting an inverter (28) between their control inputs.

12. A device according to one of the preceding claims, characterised in that the transmitting assembly (4) comprises a limiter (26) for the feed current of the generators (23-24).

13. A device according to claim 12, characterised in that the currant limiter (25) is connected to a positive supply terminal of one of the generators (23), a detector (27) being connected to its negative supply terminal.

14. A device according to any one of the preceding claims, characterised in that the signals to be transmitted which control the current generators (23-24) of the transmitter (4) result from the superimposition of first video signals and of second signals, previously modulated and possibly amplified.

15. A device according to any one of the preceding claims, characterised in that the signals transmitted to the receiving assembly (5) by the line (6-7) pads through a differential amplifier (42) and are separated by filtering (43-46) then, possibly, demodulated and amplified (44-47).

16. A device according to any one of the preceding claims, characterised in that the transmitting assembly (4) and the receiving assembly (5) are simultaneously and respectively receiver and transmitter.

17. A device according to one of the preceding claims, characterised in that the currant generators (23-24, 35-36) are equivalent to a resistance vis-a-vis the continuous component of the currant,

18. A device according to one of the preceding claims, characterised in that the two wires (6-7) are identical and have a section of the conductors less than or at the most equal to 1 mm.

**19.** A device according to one of the preceding claims, characterised in that the symmetrical transformers (55-102) are transformers having a magnetic torus each winding of which is mounted in series with one of the wires of the line.

**20.** A device according to one of the preceding claims, characterised in that the windings of the symmetrical transformers (56-102) are formed by a two-wire cable.

**21.** A device according to claim 20, characterised in that the two-wire cable forming the windings of the symmetrical transformers (56-102) is formed by the wires (6-7) of the line.

**22.** A device according to any one of the preceding claims, characterised in that the wires of the line, cylindrical or flat, are kept mutually parallel by means of a common coating of an insulating material.

**Patentansprüche**

**1.** Einrichtung zur Übertragung von Signalen, insbesondere Videosignalen, zwischen wenigstens einer Senderanordnung und wenigstens einer Empfängeranordnung vermittels einer Verbindungsleitung mit zwei Drähten, an jedem Ende ausgestattet mit einer symmetrischen Transformatoranordnung und gespeist über wenigstens einen Stromgenerator, dadurch gekennzeichnet, daß der Generator (10) symmetrisch an die Drähte (6-7) liefert und durch die zu übertragenden Signale spannungsgesteuert ist, deren Frequenz zwischen 50 Hz und 30 MHz liegt, wobei die Leitung an jedem Ende durch eine Impedanz gleich ihrem Wellenwiderstand angepaßt ist.

**2.** Einrichtung nach Anspruch 1, dadurch gekennzeichnet, daß die beiden Drähte (6-7) identisch sind und einen Querschnitt der Leiter kleiner oder höchstens gleich 1 mm aufweisen.

**3.** Einrichtung nach einem der Ansprüche 1 oder 2, dadurch gekennzeichnet, daß die symmetrischen Transformatoren (56-102) mit magnetischem Torus sind, dessen jede Wicklung in Reihe mit einem der Leitungsdrähte montiert ist.

**4.** Einrichtung nach einem der Ansprüche 1 bis 3, dadurch gekennzeichnet, daß die Wicklungen der symmetrischen Transformatoren (56-102) gebildet werden durch ein bifilares Kabel.

**5.** Einrichtung nach Anspruch 4, dadurch gekennzeichnet, daß das die Wicklungen der symmetrischen Transformatoren (56-102) bildende bifilare Kabel gebildet ist durch die Drähte (6-7) der Leitung.

**6.** Einrichtung nach einem der Ansprüche 1 bis 5, dadurch gekennzeichnet, daß die Sendeanordnung (4) und die Empfängeranordnung (5) gleichzeitig jeweils Empfänger und Sender sind.

**7.** Einrichtung nach einem der Ansprüche 1 bis 6, dadurch gekennzeichnet, daß jede Senderanordnung (4) zwei mit invertierten Spannungen gesteuerte Stromgeneratoren (23-24) aufweist, die symmetrisch auf den einen und den anderen der Drähte (6-7) der Leitung liefern, wobei diese Generatoren in Reihe mit einer Anpaßimpedanz (25) angebracht sind, deren Wert gleich dem Wellenwiderstand der Leitung ist.

**8.** Einrichtung nach Anspruch 7, dadurch gekennzeichnet, daß die Anpaßimpedanz (25) in Reihe mit den Generatoren Widerstände sowie eine Kapazität umfaßt, die geeignet ist, die kontinuierliche Kompomente der zu übertragenden Signale abzutrennen.

**9.** Einrichtung nach Anspruch 7, dadurch gekennzeichnet, daß die Anpaßimpedanz (25) der Leitung gebildet ist durch zwei in Reihe gelegte gleiche Impedanzen (95-96), deren Mittelpunkt mit der Masse über eine Kapazität (97) verbunden ist.

**10.** Einrichtung nach Anspruch 1, dadurch gekennzeichnet, daß in jeder Empfängeranordnung (5) die Anpaßimpedanz der Leitung parallel zu dieser gelegt ist und durch zwei gleiche in Reihe geschaltete Impedanzen geschaltet ist, deren Mittelpunkt mit der Masse über eine Kapazität verbunden ist.

**11.** Einrichtung nach Anspruch 1, dadurch gekennzeichnet, daß die Empfängeranordnung (5) zwei Stromgeneratoren (35-36) umfaßt, die einen Speisestrom für diese Empfängeranordnung liefern.

**12.** Einrichtung nach Anspruch 11, dadurch gekennzeichnet, daß die Empfängeranordnung (5) einen komplementären Stromgenerator (170 )mit symmetrischer Funktionsweise umfaßt ,der durch modulierte Signale spannungsgesteuert ist, die unterschiedlich zu denen sind, welche die Generatoren (23-24) der Senderanordnung (4) steuern.

**13.** Einrichtung nach Anspruch 12, dadurch gekennzeichnet, daß die dem komplementären Generator (170) steuernden modulierten Signale Fernsteuersignale sind.

**14.** Einrichtung nach einem der Ansprüche 1 bis 13, dadurch gekennzeichnet, daß die Empfängeranordnung (5) die auf der Leitung übertragenen Signale von der Senderanordnung (4) über eine Diodenbrücke (11) empfängt.

**15.** Einrichtung nach Anspruch 7, dadurch gekennzeichnet, daß die Empfängeranordnung (4) einen Speisestrombegrenzer (26) für die Generatoren (23-24) umfaßt.

**16.** Einrichtung nach Anspruch 15, dadurch gekennzeichnet, daß der Strombegrenzer (26) mit einem positiven Speiseanschluß eines der Generatoren (23) verbunden ist, wobei ein Detektor (27) mit seinem negativen Speiseanschluß verbunden ist.

**17.** Einrichtung nach einem der Ansprüche 1 bis 16, dadurch gekennzeichnet, daß die zu üertragenden Signale, welche die Stromgeneratoren (23-24) des Senders (4) steuern, aus der Überlagerung erster Videosignale und zweiter Signale resultieren, welche vorher moduliert und gegebenenfalls verstärkt wurden.

**18.** Einrichtung nach einem der Ansprüche 1 bis 17, dadurch gekennzeichnet, daß die an die Empfängeranordnung (4) über die Leitung (67) übertragenen Signale durch einen Differenzialverstärker (42) gehen und durch Filtrierung (43-46) getrennt und gegebenenfalls demoduliert und verstärkt (44-47) werden.

**19.** Einrichtung nach Anspruch 11, dadurch gekennzeichnet, zwischen den beiden Stromgeneratoren (35-36) der Empfängeranordnung (4) ein Spannungsbegrenzer (39) gelegt ist.

**20.** Einrichtung nach Anspruch 19, dadurch gekennzeichnet, daß der Spannungsbegrenzer (39) eine Zenerdiode ist.

**21.** Einrichtung nach einem der Ansprüche 1 bis 20, dadurch gekennzeichnet, daß die Stromgeneratoren (23-24, 35-36) äquivalent einem Widerstand gegenüber der Gleichstromkomponente sind.

**22.** Einrichtung nach einem der Ansprüche 1 bis 21, dadurch gekennzeichnet, daß die zylindrischen oder flachen Drähte der Leitung parallel untereinander vermittels einer gemeinsamen Umhüllung aus einem isolierenden Material gehalten sind.

# Fig.1

# Fig.2

# Fig.3

FIG. 4

EP 0 281 440 B1

Fig.5